# EUROPÄISCHE PATENTSCHRIFT

(11) **EP 0 405 146 B1**
(45) Veröffentlichungstag und Bekanntmachung des Hinweises auf die Patenterteilung: **23.02.1994**
(21) Anmeldenummer: 90110014.9
(22) Anmeldetag: 26.05.1990
(51) Int. Cl.: B65D 65/38, A23G 3/00

(54) **Verpackung für Lebensmittel-Produkte**
Package for food products
Récipient pour préparations culinaires

(30) Priorität: 30.06.1989 DE 3921584
(43) Veröffentlichungstag der Anmeldung: 02.01.1991
(60) Teilanmeldung: 93113091.8
(73) Patentinhaber: Schmitz-Scholl, Wilh., D-45466 Mühlheim an der Ruhr (DE)
(72) Erfinder: Thörner, Hans-Heinz, D-4200 Oberhausen (DE); Kühn, Rolf, D-4200 Oberhausen (DE)
(74) Vertreter: Andrejewski, Walter

(56) Entgegenhaltungen:
- FR-A- 2 584 683
- GB-A- 327 322
- US-A- 2 759 826

## Beschreibung

Die Erfindung betrifft eine Verpackung für Lebensmittel-Produkte mit den im Oberbegriff von Anspruch 1 aufgeführten Merkmalen. Das Verpackungsaußenteil kann beispielsweise in Form einer Schachtel, einer Kiste od. dgl. aufgebaut sein. Es kann sich aber auch um eine Folie, z. B. eine umhüllende oder abdeckende Folie handeln. Die Erfindung bezieht sich insbesondere auf solche Verpackungen die im Lebensmittel-Einzelhandel eingesetzt werden.

Bei der (aus der Praxis) bekannten Verpackung z.B. nach GB-A-327 322 oder US-A-2 759 826, von der die Erfindung ausgeht, besteht das Verpackungsaußenteil zumeist aus Pappe, Karton in Form von Feinpappe, Steifpapier, Kunststoffolie, Metallfolie od. dgl.. Das Verpackungsinnenteil besteht aus einem Lebensmittel. Auch sind Verpackungsinnenteile aus einer ausreichend steifen Kunststoffolie bekannt, die mehrere durch Tiefziehen hergestellte Ausformungen aufweist. In dieser Form werden die Verpackungen, insbesondere für Pralinen, Gebäck oder ähnliche Süßwaren eingesetzt. Ein Verpackungsinnenteil aus Kunststoff stellt bei üblicher Entsorgung eine Umweltbelastung dar, weil es nur schwer verrottet und beim Verbrennen umweltbelastende Verbrennungsprodukte entwickelt. Im übrigen kann nicht ausgeschlossen werden, daß Lebensmittel-Produkte, die mit einem solchen Verpackungsinnenteil in Kontakt kommen, kontaminieren, weil Verpackungsbestandteile, z.B. Weichmacher od. dgl., in das Lebensmittel-Produkt hineindiffundieren.

Der Erfindung liegt die Aufgabe zugrunde, eine Verpackung des eingangs beschriebenen Aufbaus so weiter auszubilden, daß die Gefahr der Umweltbelastung oder Produktkontamination durch das Verpackungsinnenteil nicht mehr besteht und so, daß das Verpackungsinnenteil alle auftretenden Beanspruchungen aufnimmt.

Zur Lösung dieser Aufgabe lehrt die Erfindung, daß das Verpackungsinnenteil aus einem Lebensmittel geformt ist, in welchem eine Bewehrung aus Naturfasern, vorzugsweise verdaubaren Naturfasern, eingebettet ist, damit das Verpackungsinnenteil alle auftretenden Beanspruchungen aufnimmt, insbesondere also hinreichende Festigkeit besitzt. Die Bewehrung erfüllt eine mechanische Funktion, nämlich die einer Verstärkung. Sie kann ihrerseits aus einem Lebensmittel bestehen. Im Rahmen der Erfindung kann das Verpackungsinnenteil als Backgut, Trockengut oder Preßgut geformt sein. Dabei kann das Backgut aus Mehl mit Zutaten, beispielsweise oblatenähnlich, aus Eiweiß mit Zutaten, beispielsweise in Form von Preßfleisch, Zuckerschaum mit Zutaten u. dgl. bestehen. Das Verpackungsinnenteil kann aber auch als Kristallkonglomerat geformt sein. Auch kann es ein Faservlies aufweisen. Im Rahmen der Erfindung liegt es, es dekorativ zu gestalten.

Arbeitet man mit einer erfindungsgemäßen Verpackung, so kann das Verpackungsinnenteil so eingerichtet werden, daß es ebenfalls verzehrbar ist. Jedenfalls ist das Verpackungsinnenteil problemlos zu entsorgen und es können kontaminierende Bestandteile in das Lebensmittel-Produkt nicht mehr hineindiffundieren. Wenn das Verpackungsinnenteil für den Verzehr bestimmt ist, so sollte die Bewehrung so eingerichtet sein, daß sie verdaubar ist. Vorzugsweise besteht die Faserbewehrung aus Naturfasern. insbesondere verdaubaren Naturfasern. In dieser Form kann die Verpackung auch so eingerichtet werden, daß sie von Menschen verzehrt werden kann. Von Vorteil ist, daß die Verpackung jedenfalls problemlos entsorgt werden kann. Kontaminierende Bestandteile können in das Lebensmittel-Produkt nicht hineindiffundieren.

Im folgenden wird die Erfindung anhand einer lediglich ein Ausführungsbeispiel darstellenden Zeichnung ausführlicher erläutert. Es zeigen in schematischer Darstellung
- Fig. 1: das Verpackungsinnenteil einer erfindungsgemäßen Verpackung,
- Fig. 2: in gegenüber der Fig. 1 wesentlich vergrößertem Maßstab einen Schnitt in Richtung A-A durch den Gegenstand nach Fig. 1,
- Fig. 3: einen Ausschnitt B aus dem Gegenstand der Fig. 2, und
- Fig. 4: einen Ausschnitt aus der Faserbewehrung des Gegenstandes der Fig. 1 in der Draufsicht.

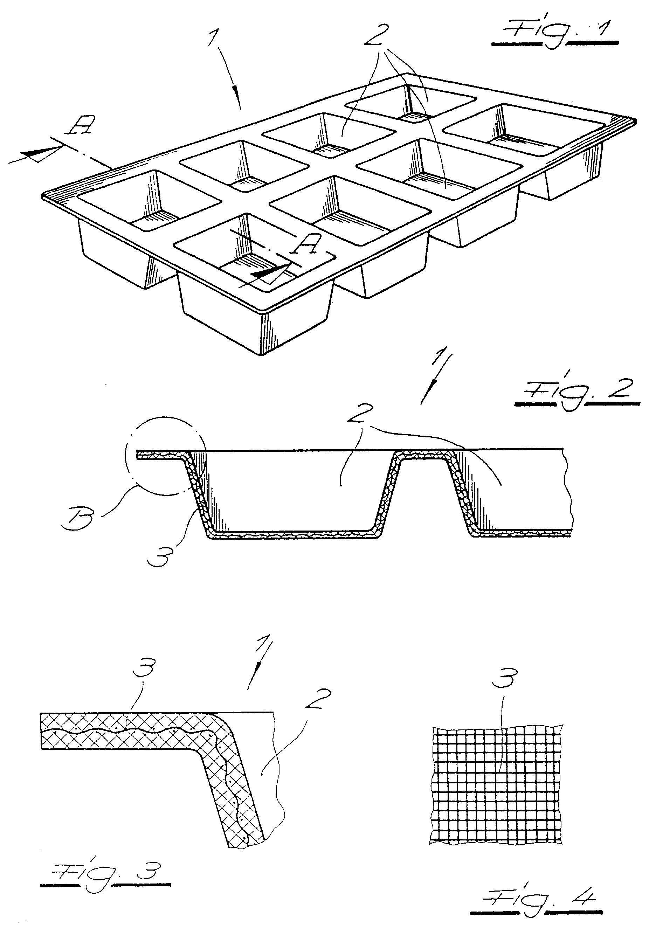

In den Figuren ist ein Verpackungsinnenteil 1 dargestellt, welches für eine Verpackung für Lebensmittel-Produkte bestimmt ist, die aus einem solchen Verpackungsinnenteil und außerdem einem Verpackungsaußenteil besteht. Bei dem Verpackungsaußenteil kann es sich um eine Schachtel, eine Kiste, eine Schlauchpackung od. dgl. handeln, die aus Pappe, Feinpappe oder Steifpapier, Folie od. dgl. aufgebaut ist. Das Verpackungsinnenteil 1 besitzt eine Mehrzahl von Ausformungen 2 für die Aufnahme des Produktes. Im Ausführungsbeispiel mag es sich um Pralinen handeln. Das Verpackungsinnenteil 1 ist aus einem Lebensmittel geformt. Es besitzt eine Faserbewehrung 3. Die Fig. 2 und 3 machen deutlich, daß das Verpackungsinnenteil 1 als Backgut geformt ist. Es könnte aber auch, wie beschrieben, anders aufgebaut oder geformt sein. Die Faserbewehrung 3 ist netzförmig aufgebaut, sie besteht aus Naturfasern, und zwar verdaubaren Naturfasern.

## Patentansprüche

1. Verpackung für Lebensmittel-Produkte mit
einem Verpackungsaußenteil und
einem Verpackungsinnenteil, welches zumindest eine Ausformung für die unmittelbare Aufnahme eines Lebensmittel-Produktes aufweist,
wobei das Verpackungsinnenteil aus einem Lebensmittel geformt ist, dadurch gekennzeichnet, daß in dieses Verpackungsinnenteil eine Bewehrung aus Naturfasern, vorzugsweise verdaubaren Naturfasern, eingebettet ist.

2. Verpackung nach Anspruch 1, wobei das Verpackungsinnenteil aus Backgut besteht.

3. Verpackung nach Anspruch 1, wobei das Verpackungsinnenteil aus Preßgut besteht.

4. Verpackung nach Anspruch 1, wobei das Verpackungsinnenteil aus einem Trockengut besteht.

5. Verpackung nach einem der Ansprüche 1 bis 4, wobei das Verpackungsinnenteil aus einem Kristallkonglomerat besteht.

6. Verpackung nach einem der Ansprüche 1 bis 4, wobei das Verpackungsinnenteil ein Faservlies aufweist.

## Claims

1. A package for food products with
a package outer part and
a package inner part which comprises at least one shaped region for directly receiving a food product,
wherein the package inner part is formed from a foodstuff, characterised in that a reinforcement of natural fibres, preferably digestible fibres, is embedded in the said package inner part.

2. A package according to claim 1, wherein the package inner part consists of baked material.

3. A package according to claim 1, wherein the package inner part consists of pressed material.

4. A package according to claim 1, wherein the package inner part consists of a dried material.

5. A package according to any one of claims 1 to 4, wherein the package inner part consists of a crystalline conglomerate.

6. A package according to any one of claims 1 to 4, wherein the package inner part comprises a fibre mat.

## Revendications

1. Emballage pour des produits formés de denrées alimentaires, comportant
une partie extérieure d'emballage, et
une partie intérieure d'emballage, qui possède au moins un évidement permettant de loger directement un produit formé d'une denrée alimentaire,
la partie intérieure de l'emballage étant formée d'une denrée alimentaire,
caractérisé en ce qu'une armature formée de fibres naturelles, de préférence de fibres naturelles comestibles, est insérée dans cette partie intérieure de l'emballage.

2. Emballage selon la revendication 1, dans lequel la partie intérieure de l'emballage est constituée par une substance cuite.

3. Emballage selon la revendication 1, dans lequel la partie intérieure de l'emballage est constituée par une substance pressée.

4. Emballage selon la revendication 1, dans lequel la partie intérieure de l'emballage est constituée par une substance sèche.

5. Emballage selon l'une des revendications 1 à 4, dans lequel la partie intérieure de l'emballage est constituée par un conglomérat cristallin.

6. Emballage selon l'une des revendications 1 à 4, dans lequel la partie intérieure de l'emballage est formée d'une nappe de fibres.
